# EUROPEAN PATENT APPLICATION

(11) **EP 1 052 828 A2**
(43) Date of publication of application: **15.11.2000**
(21) Application number: 00303955.9
(22) Date of filing: 11.05.2000
(51) Int. Cl.: H04L 29/06, H04N 7/173

(54) **System and method for providing multimedia information over a network**

(30) Priority: 12.05.1999 KR 9916951; 10.12.1999 KR 9956600; 21.03.2000 KR 0014330; 21.03.2000 KR 0014331
(71) Applicant: Seecops Co. Ltd., Mapo-gu, Seoul (KR)
(72) Inventor: Kim, Kwang Soo, 104-409, Doosan Apt., Puchon, Kyunggi-do (KR)
(74) Representative: Mounteney, Simon James

(57) **Abstract**

Record medium having multimedia information and multimedia information reproduction program, multimedia information-providing system based on a network, and a method therefor is disclosed to display multimedia elements such as animations or audio tracks, and so on, as well as an original language with respect to a voice contained in multimedia and its translated text, while providing various applied caption functions. The present invention includes the record medium having multimedia information manufactured to learn, see and hear during a reproduction for a user to use a computer system, and a multimedia reproduction program capable of executing the multimedia information automatically through the computer system. Further, the present invention comprises a data input part for receiving the multimedia information and the multimedia driving program to provide the multimedia information to the user by the server administrator; a database part for storing at least one or more multimedia information and additional information with respect to the multimedia information, and having at least one or more pieces of analysis information allowing to analyze the login data of the user and the user; a communication control part for outputting a multimedia information request signal and a purchase request signal inputted by the user of the client personal computer, outputting the multimedia information inputted from the external in response to the multimedia information request signal, outputting the purchase request signal inputted by the user, completing a purchase of the multimedia information selected by the user in response to the purchase request signal, and transmitting a message to the client personal computer, wherein the message is outputted according to the completion of the purchase. Accordingly, the present invention allows the user to receive and appreciate a desired multimedia caption function with an easy purchase through a network.

## Description

The present invention relates to record medium having multimedia information and multimedia information reproduction program, multimedia information-providing system based on a network, and a method therefor, and more particularly to record medium having multimedia information and multimedia information reproduction program, multimedia information-providing system based on a network, and a method therefor, capable of processing and providing caption goods which are able to selectively output at least one or more languages in order for users to be easily understood.

In general, the Internet is an open network constituted in order for anyone to be freely connected anywhere in the world to desired other computers with the common protocol of the Transmission Control Protocol/Internet Protocol(TCP/IP), allowing to transmit basic character information as well as multimedia information appearing together with compression technologies, in addition to services such as electronic mails, file transmissions, World Wide Web(WWW), and so on.

Such use of the Internet is rapidly and world-widely increased, including Korea, so the importance of the Internet is sharply increased as a strategic tool for enhancing the efficiency and productivity throughout the existing industries. New business opportunities are continuously created through the Internet and the areas to which the Internet is applied are expanded, so that Internet-using businessmen are gradually increased.

That is, recently, as business through the Internet, sites for providing various contents such as Internet advertisement, Internet broadcasting, on-line games, Internet newspapers/magazines, search services, portal services, electronic commerce, and so on are sharply increased.

However, the sites are just providing multimedia when providing the multimedia, so that its contents can not be understood in case that users do not understand languages contained in the multimedia.

Further, there are little or no sites for providing caption functions appropriate for multimedia-using language learning or for English learners requiring various caption-applied learning functions as well as users who want to study other languages.

Further, record medium having an animation/audio signal such as general movies, cartoon movies, music video, and so on, typically, CD-ROMs are recently populated in accordance with development of computer systems, but there still exists a problem since users of the computer systems remain in a rudimentary use ,such as learning through a simple and repeated reproduction.

In order to alleviate the problem, it is an objection of the present invention to provide a multimedia information-providing system based on a network and a method therefor for providing various applied learning functions and caption functions of providing multimedia, displaying an original language included in the multimedia, and displaying one or more other languages translated from the original language.

It is another object of the present invention to provide record medium having multimedia information and multimedia information-providing program capable of outputting the multimedia information in the original language while displaying one or more languages translated from the original language according to a user's intention in case of seeing and hearing while reproducing the multimedia information by using a computer system of a user's own with supplies of the multimedia information and the record medium having a program capable of reproducing the multimedia information.

In order to achieve the above objects, the present invention comprises a communication network for providing communication connections of undefined individuals to allow mutual data communications to be performed; client personal computers each having a web browser to receive multimedia information through the communication network, and for outputting login data inputted by a user according to predetermined data received from external in case that a user is connected to a web site for providing the multimedia information through the web browser, for outputting an initial display for receiving the multimedia information transmitted from the external after a login is completed by the user, and for outputting a detailed information request signal of the multimedia information of the user or multimedia information purchase request data which is inputted through the initial display; a multimedia information-providing server for classifying the multimedia information by the item to be provided to the initial display of the client personal computer, providing at least one or more multimedia detail information with respect to each item in response to the detailed information request signal of the multimedia information inputted by the user from the initial display, and outputting to the external a driving program for reproducing and outputting the multimedia information according to multimedia information purchase data inputted from the user of the client personal computer.

In order to achieve the object, the method according to the present invention comprises (1) building a database through a production of multimedia information by a system administrator in a multimedia information-providing server, and building a web site for providing the produced multimedia information to a user; (2) performing a communication connection to the multimedia information-providing server by plural client personal computer users; (3) providing different multimedia information to each user according to each client personal computer user connected to the multimedia information-providing server; (4) informing a user of a purchase amount in case that a purchase request signal is inputted by the user provided with multimedia information, outputting a message informing of a completion of a purchase of the multimedia information in case that a recognition signal for the purchased amount is inputted from the client personal computer, and delivering the multimedia information to the user.

In order to achieve the object, in record medium disposed in a record reproduction device equipped in a personal computer and for reproducing predetermined multimedia information, the present invention provides the record medium readable with a computer system and comprising a first area for recording multimedia information; a second area for recording text data corresponding to the multimedia information; and a third area for recording a driving program for reproducing multimedia for outputting text data corresponding to the multimedia information.

Prior to further detailed description of the present invention, a brief definition of 'multimedia information' term which is used in the specification for the present invention is explained. That is, the multimedia information refers to animation information manufactured in animation compression methods as well as an audio track contained in a general disc manufactured in a traditional method, wherein the animation compression methods include Audio video interface(AVI), Motion Picture Experts Group-1(MPEG-1), Super Video Compact Disk(480 x 480 dots x 30 frame/sec)(SVCD), DVD, and MPEG-4, which are used as a standard in the Windows.

The above objects and other advantages of the present invention will become apparent by describing in detail a preferred embodiment thereof with reference to the attached drawings, in which:
FIG. 1 is a view for explaining a multimedia information-providing system based on a network according to an embodiment of the present invention;
FIG. 2 is a block diagram for explaining a structure of a multimedia information-providing server of FIG. 1;
FIG. 3 is a flow chart for explaining a multimedia information-providing method based on a network according to an embodiment of the present invention;
FIG. 4 is a flow chart for explaining a web site-building routine for providing multimedia information of FIG. 3;
FIG. 5 is a flow chart for explaining a communication connection routine to the multimedia information server of FIG. 3 for users;
FIG. 6 is an illustrative display for a multimedia reproduction device for reading frame numbers of multimedia according to an embodiment of the present invention;
FIG. 7 is a view for explaining data structures of the multimedia information according to an embodiment of the present invention;
FIG. 8 is a view for showing a data record structure of multimedia record medium manufactured according to an embodiment of the present invention;
FIG. 9 is an illustrative display of a recording mode according to an embodiment of the present invention;
FIG. 10 is a display view provided to users in case that arbitrary multimedia information of the multimedia information provided according to an embodiment of the present invention;

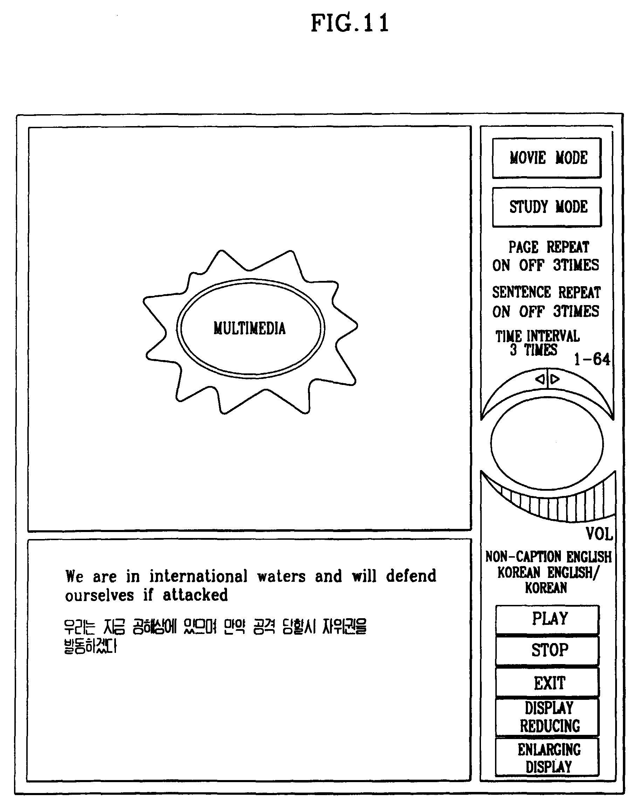

FIG. 11 is an enlarged view of a display of FIG. 11; and
FIG. 12 is a reduced view of a display of FIG. 12.

Hereinafter, a multimedia information-providing system based on a network according to the preferred embodiment of the present invention will be described in detail.

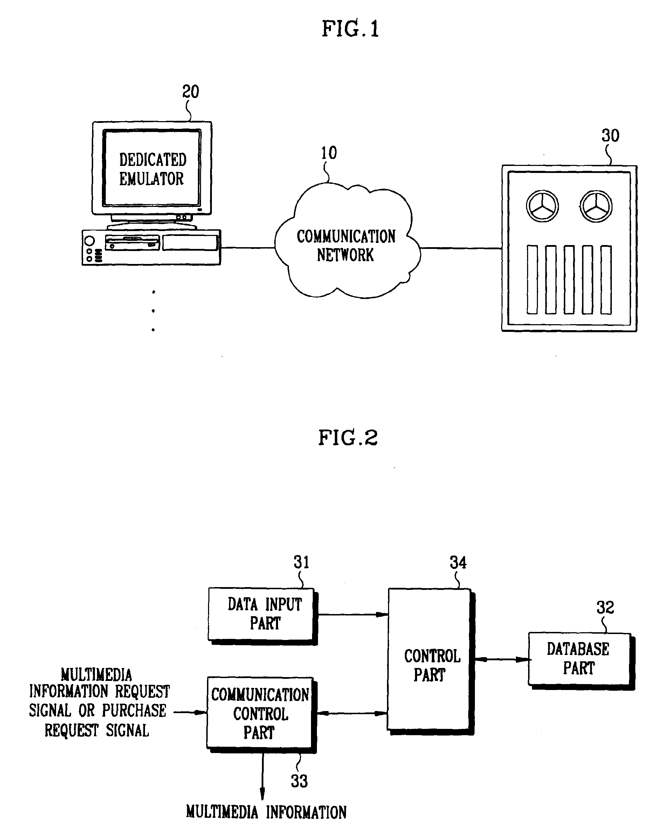

FIG. 1 is a view for explaining a multimedia information-providing system based on a network according to an embodiment of the present invention.

As shown in FIG. 1, a communication network 10 provides communication connections of undefined individuals to allow mutual data communications to be performed.

A client personal computer 20 has a web browser to receive multimedia information through the communication network 10. In case that the web browser is executed to be connected to a server 30 to provide multimedia information by a user, a login data inputted by a user is outputted according to certain data inputted from the multimedia information-providing server 30. After the login of each user is successfully executed, an initial display is outputted for a user to receive multimedia information transmitted from external, and a detailed information request signal of user's multimedia information or multimedia purchase request data inputted through the initial display is outputted.

The multimedia information-providing server 30 classifies multimedia information, which is prepared by a server administrator and built as database, by the item to be provided for the initial display of the client personal computer, provides at least one or more multimedia detail information with respect to each item in response to a detailed information request signal of multimedia information inputted by a user on the initial display, and sell goods on-line according to multimedia purchase data inputted by a user of the client personal computer.

Further, the multimedia information-providing server 30 selectively provides a detailed explanation of the multimedia information in an original language, its translated version, or the original language together with its translated version according to a selection of a user.

Further, the multimedia information-providing server 30 has a bookmark function in the multimedia information provided to the client personal computer 20. If the bookmark function is selected during searching the multimedia information by a user and the same multimedia information is selected when re-connected after the completion of the connection, multimedia information just after the information provided to the user prior to the connection is provided.

Further, the multimedia information-providing server 30 transmits to the client personal computer 20 a message for checking whether a transmission is made to the client personal computer or to a certain address after recorded on a record medium in case a purchase request signal is inputted from a user, and provides multimedia information of the purchase request inputted by the user in response to a response signal transmitted from the client personal computer.

Analysis information of the user is at least one of age of the user, information on purchase goods, information of purchase number of times with respect to the same item, and an initial display provided to each client personal computer 20 from the multimedia information-providing server 30 may be differently provided according to an analyzed result by the analysis information of the user.

FIG. 2 is a block diagram for explaining a structure of a multimedia information-providing server of FIG. 1.

As shown in FIG. 2, a data input part 31, which is an constituent of the multimedia information-providing server 30, inputs the multimedia information and an operating program for providing the multimedia information to a user by a server administrator.

The data input part 31 may be a simple input device like a keyboard in some cases, or a storage device on which a program is stored.

A database part 32 stores at least one or more multimedia information and additional information on the multimedia, and has at least one or more analysis information allowing to analyze user's login data and a user.

A communication control part 33 outputs a multimedia information request signal or a purchase request signal inputted by a user of the client personal computer, outputs to the client personal computer 20 multimedia information inputted from a control part 34 in response to the multimedia information request signal, outputs a purchase request signal inputted by the user, completes a purchase of multimedia information selected by a user in response to the purchase request signal, and transmits to the client personal computer a message outputted according to the completion of the purchase.

The control part 34 judges if a login data is registered in the database part 22 in case that the login data is inputted from the client personal computer 20, provides multimedia information to a user by using the user's analysis information in case that the login data is judged to be registered, outputs a message informing of the completion of the purchase in case that a purchase request signal for purchasing arbitrary multimedia information of provided multimedia information is inputted through the communication control part 33, competes the purchase, counts the purchase number of times and information of purchased goods accumulatively to be stored in correspondence with login data of the database part 32, to thereby control the entire system.

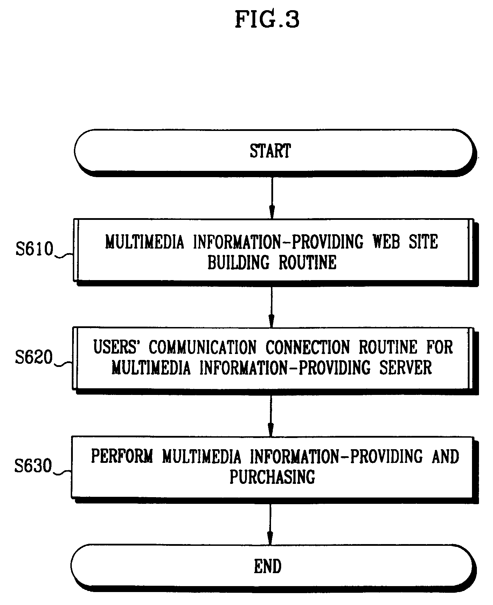

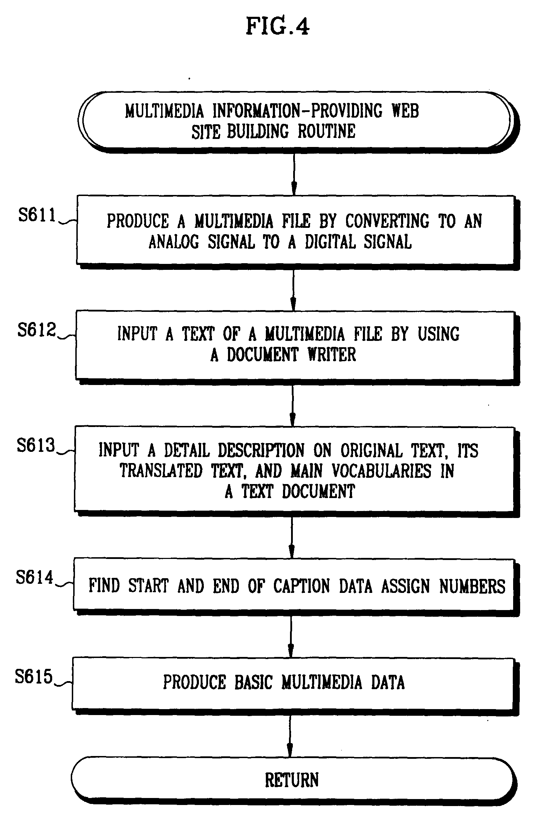

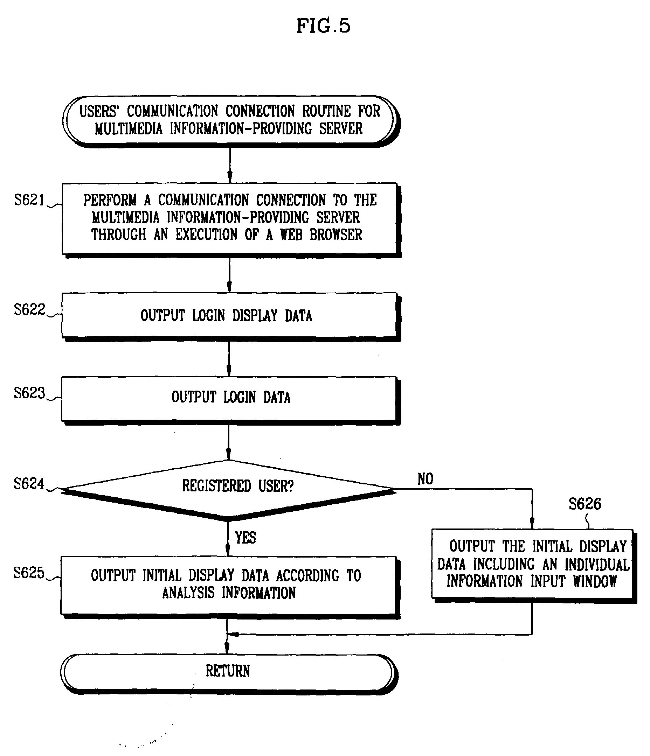

The operations of a control system of multimedia information based on a network according to an embodiment of the present invention will be described in more detail with reference to FIG. 1 to FIG. 9 of the accompanying drawings.

First of all, the multimedia information-providing server 30 has a database based on multimedia information provided by a system administrator, and a web site for providing the provided multimedia information to a user(S610).

That is, the system administrator selects movie films, video tapes, and so on to be included in multimedia data, converts the multimedia data formed in an analog signal recorded on the medium to a digital signal, and produces multimedia files(S611).

Further, a text of the multimedia files is inputted by using a document writer(S612), detailed descriptions with respect to a original statement of the multimedia files, its translation, and main vocabularies in a text document form(S613).

That is, the contents of the text is inputted to be stored in a file, data by the sentence by distinguishing voiceless sounds of the start and end of a sentence is prepared, a page number and a line number are given to each sentence having voiceless sound start point and end point from data by the sentence to form a multimedia text.

At this time, a page are arbitrarily set with 8 to 15 lines under the consideration of a window size displaying caption data in a basic screen. Further, pages, file information, and vocabulary description for explaining main vocabularies in a sentence are prepared with reference to the data by the sentence.

As stated above, video file such as multimedia text data, page information, and so on, and vocabulary description data are prepared by using the data by the sentence, and multimedia data capable of being stored in a computer system is prepared by using a multimedia data convener with respect to the above data.

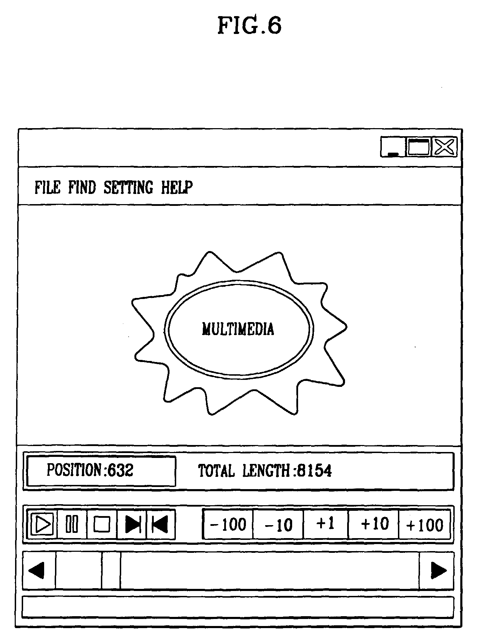

In the meantime, a system administrator reproduces the multimedia file by using a multimedia reproducer having a display shown in FIG. 6, detects multimedia corresponding to an audio sound, find start and end frames of caption data to assign a number(S614).

That is, frame numbers are read which are necessary for a synchronization with a text by using frame movement button of -100, -10, +1, +10, +100 and a play/stop button while loading and reproducing the multimedia file.

As usual, the slide button on a lower portion can be used, but there exists difficulties in finding an exact position. In case of using frame increase and decrease buttons as usual, an exact position can not be found in a short time since using the buttons allow frames to move frame by frame.

According to this, start and end frames of the caption data are found which are corresponding to multimedia by loading, reproducing, and listening to multimedia file. At this time, the unit of moving frames is given to -100, -10, +1, +10, +100 to allow a desired frame to be found in a short time.

Further, multimedia information is produced by combining a text with frame numbers of the start and end in reference of 60 English characters appropriate to be displayed in a line(S615).

The multimedia information has extensions of 'dat', 'int' ,and 'ano' when recorded as a file on record medium.

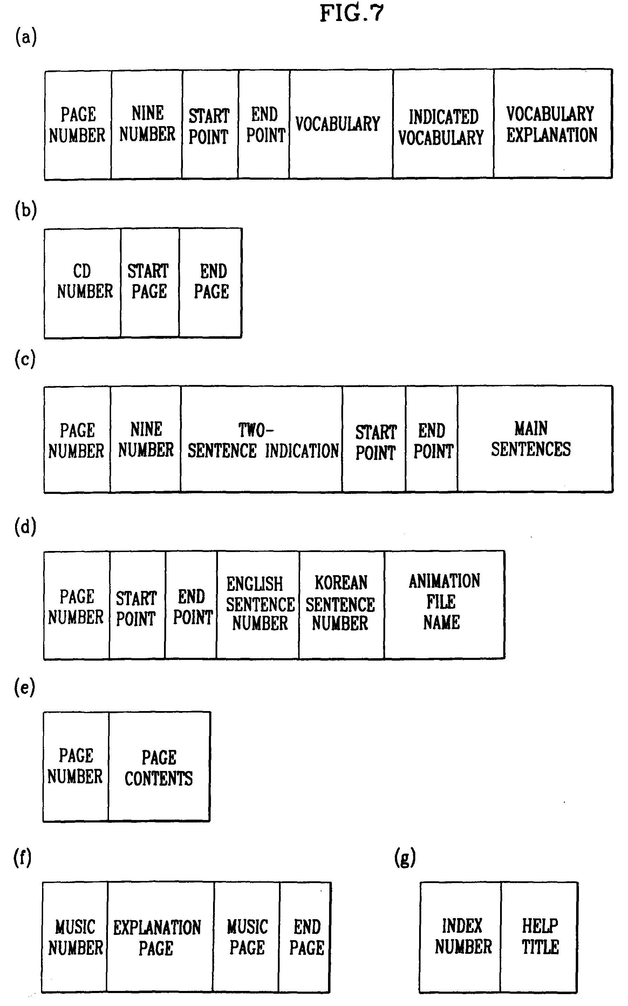

At this time, a structure of multimedia information, as shown in FIG. 7, includes vocabulary explanation information data having a page number field, a line number field, a start point field, an end point field, an indicated vocabulary field, and a vocabulary explanation field; text contents having a page number field, a line number field, a two sentence indication field, a start point field, an end point field, and a main sentence field; a page having line indication information data, a page number field, a start point field, an end point field, an English sentence number field, a Korean sentence number field, and a multimedia file name field; a text output having multimedia file information data, page number field, and a page contents field; text file information data having display movement/display indication information data, a page number field, and a page contents field; and text file information data having a text number field, an explanation page field, a text page field, and an end page field; and so on.

With the above method, at least one or more multimedia data to be provided to a user, which is in a database part 320 of the multimedia information-providing server 30, is built and a program for providing the multimedia information to the user is built based on the database built as above.

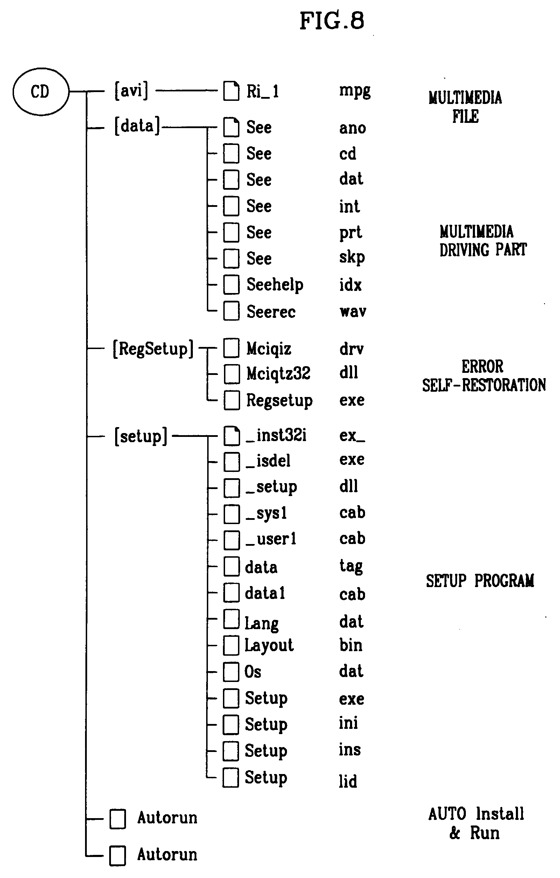

In case that the multimedia information built in the database is stored on record medium and delivered to a user who requested a purchase, a directory is formed, as shown in FIG. 8, on the record medium, so that the user can receive the same service as all services which may be provided when connected to the multimedia information-providing server 30. All information is stored in the record medium in order to perform the same as a dedicated emulator.

On the record medium is stored a directory[avi] for storing multimedia file, a directory[data] for storing animation-driving data, a directory[Regsetup] for storing an error self-restoration program, and a directory[setup] for storing a setup program, together with an automatic setup file of 'Autorun.exe' and 'Autorun.inf'.

The error self-restoration program is considered to provide an error self-restoration function under the full consideration of weak multimedia environments of a personal computer. The possibility of damages to multimedia-related resources is very high in installing and uninstalling various programs, especially games and the like, in personal computers.

Therefore, a separate error self-restoration function is provided to secure a stable use of users.

On the multimedia-driving data directory is stored vocabulary explanation information(***.ano), record medium recognition information and the number of pages information(***.cd), text contents, line indication information(***.dat), pages, multimedia file information(***.int), text output display indication information(***.prt), track file information(***.sdt), display skip display and indication information(***.skp), help index(***.idx), recording file(***.wav), and so on, to be used for information to control caption controls and multimedia reproductions.

Out of the above files, the record medium recognition information and the number of pages information, the text output display indication information, the display skip and display indication information, and the help index information is prepared with a basically provided document writer in a personal computer, and the vocabulary explanation information, the text contents and line indication information, the page and multimedia file information, and the text file information are prepared with a multimedia data converter.

The multimedia data converter is executed, the converted text file is loaded, data is confirmed, and a conversion button is clicked to convert the data in a multimedia-driving data format.

Further, the vocabulary explanation data, the page animation file data, and the text file data are confirmed, and a storage button is clicked to store the data in a hard disk which is priority auxiliary storage device.

According to this, caption data, that is, as in case of [1/1/1/1481/1708/' English words'][1/1/1/1481/1708/'Korean words']... is stored to mean [page/line/the number of lines/start frame/end frame/'words'].

As stated above, multimedia data applied to the embodiment of the present invention is prepared by using the record medium recording device, and the prepared data is stored on the record medium together with the multimedia information.

Text data is prepared which corresponds to an audio track recorded on a general music CD manufactured in a peculiar mode separately from animation-contained multimedia information, as below.

It is the feature that the entire storage time of music contained in the audio track and the time value with respect to a present reproduction position are converted into numerical values in thousandths to use position information. Multimedia information corresponding to the audio track in the same method as one that produces the multimedia information corresponding to the animation based on the position information is prepared, and the prepared multimedia information is recorded on record medium together with the audio track.

After a construction of the system for providing multimedia information in the multimedia information-providing server 30 as above, confirmations are made with respect to whether communication connections to the multimedia information-providing server 30 are accomplished through the communication network 10 such as the Internet by plural client personal computer users(S620).

That is, if the communication connections to the multimedia information-providing server 30 are performed through a web browser built in each client personal computer 20(S621), the multimedia information-providing server 30 outputs user login display data to the client personal computer 20 to show a login display on the screen of the client personal computer 20(S622).

Further, the plural client personal computers 20 output login data of an ID and a password of each user to the multimedia information-providing server 30 through the login display shown on the screen(S623), and the multimedia information-providing server 30 judges whether the user is registered or brand-new through the login data inputted from the user of each client personal computer(20)(S624).

In case that the user is registered as a result of the above judgement in the step(S624), the multimedia information-providing server(30) outputs different multimedia information to each client personal computer 20 according to a result analyzed by analysis information of the database part(320) to show an initial display on the screen(S625).

In case that the user is brand-new as a result of the above judgement in the step(S624), the initial display is shown on the screen together with initial display data including an individual information window(S626).

That is, for example, in case that an analysis result comes out that a woman of twenties, as a result of a search of multimedia information registered in the database part(320) as already purchase-made, prefers music of a smooth melody, the multimedia information-providing server 30, in selecting detailed items from the database part 320 for a menu of the initial display provided to the client personal computer 20, selects and outputs detailed items such as information on smooth and sweet music, information on melancholic movies, pure-hearted novels, poetry books containing beautiful poets.

Therefore, the multimedia information-providing server 30 provides a different multimedia menu to each user to prevent a user from spending much time in searching the multimedia information which the user wants to purchase and allows the user to search the multimedia information intensively with respect to a certain field of which the user is fond.

That is, the analysis information includes information informing of a user's character such as age, hobbies, and so on, and a multimedia search field provided from the multimedia information-providing server 30 with a connection of the user to the multimedia information-providing server 30, and the kind of purchased multimedia information, out of information produced when entered as a member.

At this time, multimedia information provided to the client personal computer from the multimedia information-providing server(30) is not the multimedia information having all multimedia data from the beginning to the end, but the multimedia information in a range capable of a user to understand.

That is, the multimedia information can be constructed with extraction of highlight portions in case of a movie, and with the most interesting portions of the book contents which can arouse a purchase desire of a user in case of a book.

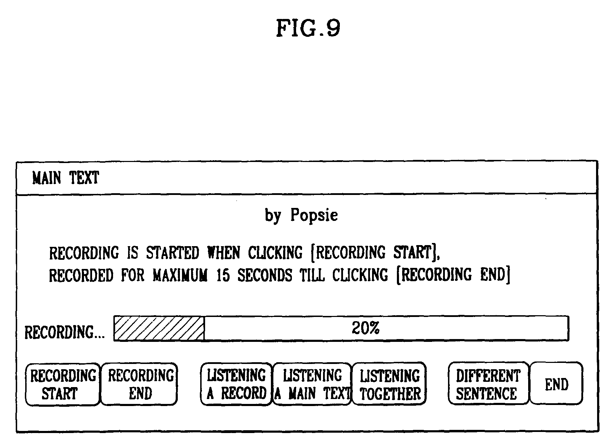

The multimedia information constructed as above is provided to a user of the client personal computer 20 in a display state as shown in FIG. 8 and FIG. 9, and multimedia data and caption data are outputted on a display according to a menu in case of selecting a certain menu on the display state.

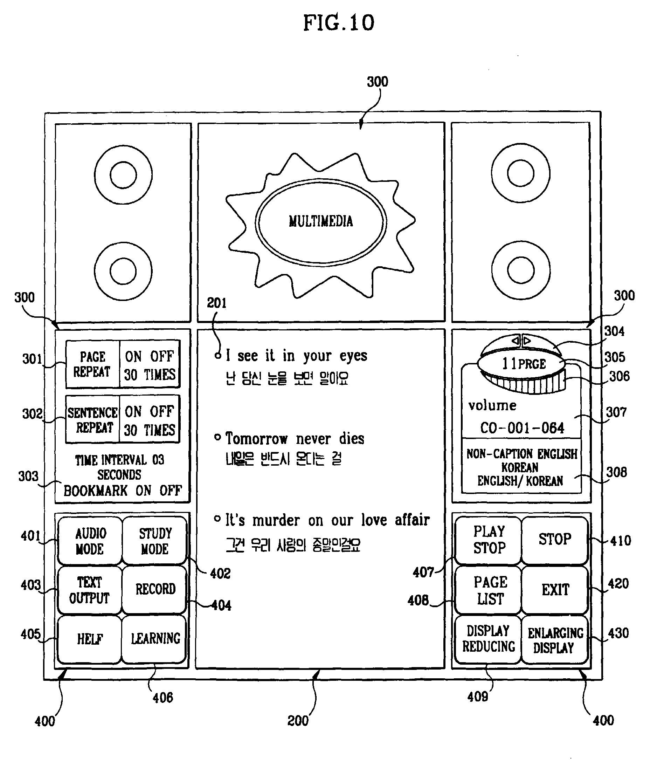

A display shown in FIG. 10 has a multimedia area 100 for indicating multimedia, a caption area 200 for indicating characters for English/Korean words, a progressing information area 300 for selecting page repeat, sentence repeat, time interval, bookmark, volume, and a caption mode, a mode area 400 for indicating a movie mode, a study mode, a slow motion mode, a learning mode, and a text output mode, a record mode, a help mode, a display minimization mode, a reproduction mode, stop, page list, exit, display minimization, display enlargement, and so on.

The display is provided from the multimedia information-providing server 30 in case that arbitrary multimedia information is selected from plural multimedia information provided on a display of the client personal computer 20 of a user, allowing to view multimedia information selected by himself.

The multimedia information is viewed in a play state of the movie mode from the initial state provided from the multimedia information-providing server 30. At this time, a caption is displayed by ten lines in correspondence with multimedia played on the caption indication display 200. The caption is displayed with white letters on a black background in the best state in reading the caption, an arrow is displayed on a sentence in a progress according to a multimedia progress, and a caption corresponding to the multimedia progressing at present in real time is marked in a yellow color.

Further, vocabularies having recorded vocabulary explanations in advance in the caption are distinguished in a different color for a mark. If a vocabulary having a vocabulary explanation during progressing multimedia, the multimedia is temporarily stopped, outputted to a corresponding vocabulary explanation window, and then returned to the original execution position of the multimedia.

In the meantime, a menu 300 having menu items for controlling a progress information condition as shown in FIG. 10 is used in case that a user purchases multimedia information provided from the multimedia information-providing server 30, as briefly described below.

First, a page repeat item 301 drives multimedia, directly controls multimedia file by the page with a creation of a logical page concept, and turns on and off the page repeat of a progress information display window allowing a repeated learning by the page unit.

In case that the page repeat is turned on, reproduction of an animation file or an audio track corresponding to the last sentence of the present page is ended, and immediately returning is made to multimedia information corresponding to the first sentence of the present page. At this time, the number of repeat is set to the number of page repeat, the possible number of repeat is from 2 to 99, and all pages are continuously provided till the number of repeat.

An automatic sentence repeat item 302 reproduces multimedia to be normally outputted in speechless portions and to be automatically repeated in a speech portions.

In the automatic sentence repeat on/off of the progress information display window, the automatic sentence repeat function is turned on, position data with respect to the start and end of multimedia is grasped to be repeatedly and automatically executed from the start position again when the end position of the position data is reached. At this time, the number of repeat times allowing to repeat a sentence automatically is set in the number of sentence repeat times, and the number of times is from 2 to 99.

An arbitrary sentence repeat item 303 has an arbitrary sentence repeat function to allow a user to repeat an arbitrary sentence. The arbitrary sentence repeat item is immediately selected separately from other repeat functions to repeat a sentence to be turned over to a next sentence anytime during reproducing a multimedia file by indicating a sentence repeat button in front of a sentence appearing on a caption indication display.

At this time, the number of repeat of the automatic sentence repeat function may be used as it is as the number of repeat, and clicking another sentence during repeating an arbitrary sentence stops the arbitrary sentence repeat immediately to be turned over to another sentence.

A time interval setting item 304 sets a time interval between sentences in reproduction in order for a user to follow during learning a foreign language in case that an entire system is changed to a study mode.

The time interval is applied on repeating sentence under the study mode, and the time interval can be adjusted from 0 to 19 seconds by controlling the time interval number with the left mouse button or the right mouse button on the progress information display window.

A page and page information display window 305 divides word sentence caption data by ten lines and logically distinguishes a page number to facilitate a repeat learning, display search, and so on by the page. The unit displayed on the caption indication display 200 is a page, and a present page number is indicated on the page information display window 305 positioned on the center in the right direction of the basic display.

An immediate page movement item 304 allows an immediate movement from the present page to the previous page or the next page. If a movement button from the last page to the next page is clicked, a question window of returning to the first is displayed, and if a movement button from the first page to the previous page is clicked, a multimedia portion corresponding to the very first sentence of the next page is again reproduced and outputted.

A reference numeral 306 is a volume control menu item having ten volume levels. If a desired level is clicked, a sound volume can be controlled during reproducing multimedia information.

A reference numeral 307 is an entire page display item for displaying information from the start page to the last page.

A reference numeral 401 is a movie mode item for display a caption in response to the progress of the multimedia information, and controls a caption display while progressing an animation according progressing information.

A reference numeral 402 is a study mode item, 403 a text output item, and 404 a record mode item.

In case that a user selects the study mode item 402, the study mode is executed by skipping speechless portions in multimedia data in progress at present to carry out speech portions, to thereby be useful in intensive language learning.

In case that a learning item 406 is selected by a user, the caption indication display 200 has different difficulties having different number of empty spaces indicated on a sentence capable of being learned, and a learning window displays items of a beginner level, an intermediate level, and an advanced level, a text listening item, a scoring item indicating the number of right answers by comparing the contents inputted in the empty space and the contents of the text, an different sentence item for displaying another sentence in the same page, a completion item returning to a display progressed before selecting the study item, and so on, together with a learning window capable of measuring vocabulary power and a dictation of a sentence in progress or in waiting.

A record mode to which the record item 404 selected by a user is converted is briefly described. First, if the record mode item 404 is selected by the user, a recording/listening window is displayed on the caption indication display 200 as shown in FIG. 9, and a text is displayed on the display to be practiced according to a sentence in progress or in waiting.

In recording processes, a microphone is mounted on the system. If a recording start item is selected through a key input part, a recording lasts for maximum 15 seconds, and a recording end button is clicked, the temporary recording is performed in a wave file in a hard disk.

In record listening processes, if a record listening menu item is selected, temporarily stored record contents are heard. If a together listening menu item is selected, the text is once heard and then stored record contents are heard.

In different sentence record selection processes, a different sentence in the same page can be selected by selecting the different sentence, and the end process returns to and re-drive a position progressed before recording and listening by selecting an end menu item.

During recording in the record mode or on reproducing record contents, a user adds a function of indicating a present progress time to the entire time in a horizontal bar graph form on the display to surely grasp a progressing time.

In addition to the above, the multimedia information-providing server 30 can enlarge and reduce a display for outputting multimedia information. The method enlarges the video area , the caption area displays in a caption one Korean sentence corresponding to one English sentence, buttons for the multimedia mode and the study mode are displayed on the upper portion, page repeat and kinds of caption are indicated on the lower portion, and the play for a progress control, the stop, the end, display reduction and enlargement are displayed.

Further, the multimedia information-providing server 30 is provided with a function enabling a slow motion reproduction. The slow motion function enables only an animation in a slow motion at a slow speed in a state that a sound is eliminated from an animation display corresponding to sentences separated by the arbitrary sentence repeat button if a user clicks the arbitrary sentence repeat button indicated in the caption area with the right mouse button.

In case that the enlarged display is once more enlarged according to a selection of a user, an enlarged display is enabled to show a display with only a caption themselves, or a full display is enable to show video images without a caption. An enlarged display can be reduced to a display of a smaller size if the display in the enlarge display is clicked.

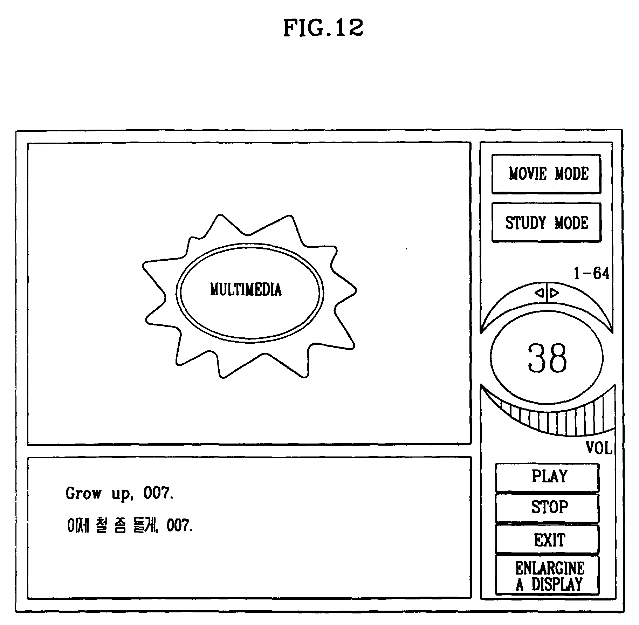

FIG. 12 shows an enlarged display reduced in an entire size on which indicates a multimedia mode, a study mode button and page paging, present progress page, a volume indication and play, stop, end, display enlargement buttons.

Therefore, the multimedia information-providing server 30 notifies a user of a purchased amount in case that a purchase request signal is inputted by the user who is provided with different multimedia information, outputs a message notifying of the purchased multimedia information in case that a signal of recognizing the purchased amount from the client personal computer 20 is inputted, and delivers the multimedia information to the user(S630).

The purchased amount can be differently calculated for each member.

That is, in case that a member who wants to purchase the multimedia information has the number of site connection times galore and purchases much multimedia information through the site, data accumulated with respect to the above is registered in a database 320 together with login data.

Further, the accumulated data is compared with a predetermined reference data every time a user wants to purchase multimedia information, a purchased amount is discounted by a corresponding percentage, and the discounted amount can be offered to the user as a purchased amount.

Therefore, each user may pay different purchase amount with respect to the same goods.

Multimedia information provided from the multimedia information-providing server 30 includes movie songs of each nation, multimedia information on dramas, a solo opera drama, a mask dance, taekwondo, multimedia information on various sports, multimedia information prepared for publicity of institutions, companies, and so on.

When a user who receives a predetermined multimedia information-recorded record medium according to a request of a user from the multimedia information-providing server 30 applied to the embodiment of the present invention mounts the record medium to a record reproduction deck(hereinafter, called 'CD-ROM') of a user's personal computer, the multimedia information is reproduced through the following process and outputted on the screen.

If a CD is inserted into a CD-ROM drive, animation-driving data is read and stored, together with a construction of a basic display, and a program is started in a condition of progress information.

That is, in case that a CD is inserted in the drive, the program is started in a progress information condition set at the time a user purchased the CD through the multimedia information-providing server 30. Thereafter, the user is connected to the multimedia information-providing server 30 through the communication network 10, and uses the multimedia information in the same process as a process through which services are receive, to thereby carry out a learning.

Further, as stated above, a CD, which is one record medium provided to a user from the multimedia information-providing server 30 is manufactured and sold on an off-line state to have all functions which can be provided to a user from the multimedia information-providing server 30 with respect to one item(for example, a piece of movie, a piece of cartoon movie, plural songs and an animation(so called, music video) corresponding to the songs).

At this time, in case that a user reproduces a CD by using a computer system, since all functions explained in the present invention are contained, repeated description will not be provided here.

As stated above, the present invention has an effect in that a user receives, appreciates, and purchases multimedia information he wants.

Further, the present invention prepares and provides caption data contained in the multimedia information provided through a network in at least two languages, and, since another function is provided in addition to selecting and viewing the caption data prepared in the two languages according to a user's intention, there is an effect in that foreign languages can be learned, rather than a mere appreciation of the multimedia information.

Further, in case that a connection is made to the multimedia information-providing server again before completely viewing the multimedia information that a user selected by using a bookmark function, since the user can avoid viewing the video information he viewed once by allowing the user to view information after his viewed information in the present invention, there is an effect in that a user's multimedia search time can be reduced.

Further, there is an effect in that a user can purchase and reproduce a CD on an off-line state by supplying to the user the CD manufactured with a multimedia information reproduction program together with multimedia information provided on an off-line state in the present invention.

Although the preferred embodiment of the present invention has been described, it will be understood by those skilled in the art that the present invention should not be limited to the described preferred embodiment, but various changes and modifications can be made within the spirit and scope of the present invention as defined by the appended claims.

## Claims

1. A multimedia information-providing system based on a network, comprising:
a communication network for providing communication connections of undefined individuals to allow mutual data communications to be performed;
client personal computers each having a web browser to receive multimedia information through the communication network, and for outputting login data inputted by a user according to predetermined data received from external in case that a user is connected to a web site for providing the multimedia information through the web browser, for outputting an initial display for receiving the multimedia information transmitted from the external after a login is completed by the user, and for outputting a detailed information request signal of the multimedia information of the user or multimedia information purchase request data which is inputted through the initial display;
a multimedia information-providing server for classifying the multimedia information by the item to be provided to the initial display of the client personal computer, providing at least one or more multimedia detail information with respect to each item in response to the detailed information request signal of the multimedia information inputted by the user from the initial display, and outputting to the external a driving program for reproducing and outputting the multimedia information according to multimedia information purchase data inputted from the user of the client personal computer; and
record medium for recording and storing the multimedia information inputted from the multimedia information-providing server and the driving program for reproducing and outputting the multimedia information.

2. The multimedia information-providing system as claimed in claim 1, wherein the multimedia information-providing server includes:
a data input part for receiving the multimedia information and the multimedia driving program to provide the multimedia information to the user by the server administrator;
a database part for storing at least one or more multimedia information and additional information with respect to the multimedia information, and having at least one or more pieces of analysis information allowing to analyze the login data of the user and the user;
a communication control part for outputting a multimedia information request signal and a purchase request signal inputted by the user of the client personal computer, outputting the multimedia information inputted from the external in response to the multimedia information request signal, outputting the purchase request signal inputted by the user, completing a purchase of the multimedia information selected by the user in response to the purchase request signal, and transmitting a message to the client personal computer, wherein the message is outputted according to the completion of the purchase; and
a control part for judging whether the login is registered in the database part in case that the login data is inputted by the client personal computer, providing the multimedia information to the user by using the analysis information of the user in case that the login data is registered according to the judgement, outputting the message informing of the completion of the purchase in case of inputting through the purchase request signal for purchasing arbitrary multimedia information of the provided multimedia information through the communication part, completing the purchase and accumulatively counting information with respect to purchased goods and the number of purchase times to be stored in correspondence with the login data of the database part, and controlling an entire system.

3. The multimedia information-providing system as claimed in claim 2, wherein the analysis information of the user includes at least one of a user's age, information on purchased goods, and information on the number of the purchased times with respect to the same goods.

4. The multimedia information-providing system as claimed in claim 1 or 2, wherein the initial display provided to each client personal computer from the multimedia information server is differently provided according to a result analyzed by the analysis information of the user.

5. The multimedia information-providing system as claimed in claim 1 or 2, wherein a method for producing the multimedia information provided to the user comprises the steps of:
producing a multimedia file by converting the multimedia information formed in an analog signal into a digital signal;
inputting a text of the multimedia file by using a document writer;
inputting an original text and a translated text of the multimedia file, and detailed descriptions of main vocabularies in a text document form;
assigning numbers to start and end frames of caption data by detecting multimedia corresponding to a sentence while reproducing the multimedia file; and
preparing basic data of the multimedia by combining the text and the numbers of the start and end frames.

6. The multimedia information-providing system as claimed in claim 5, wherein a structure of the basic data of the multimedia includes:
vocabulary description information data having a page number field, a line number field, a start point field, an end point field, an indicated vocabulary field, and a vocabulary description field;
text contents/line indication information data having the page number field, the line number field, a two sentence indication field, the start point field, the end point field, and the main sentence field;
page/multimedia file information data having the page number field, the start point field, the end point field, an English sentence number field, a Korean sentence number field, and a multimedia file name field;
text output/display movement display indication information data having the page number field and page contents field;
text file information data having the page number and the page contents field; and
text file information data having a track number field, an explanation page field, a text page field, and an end page field.

7. The multimedia information-providing system as claimed in claim 1 or 2, wherein the multimedia information-providing server selectively provides an original text, a translated text, or the original text and translated text as a detailed description of the multimedia information according to a selection of the user.

8. The multimedia information-providing system as claimed in claim 1 or 2, wherein the multimedia information-providing server provides a bookmark function to the multimedia information provided to the client personal computer, and provides multimedia information after the multimedia information provided to the user prior to a re-connection if the user is disconnected and then re-connected and selects the bookmark function during searching the multimedia information.

9. The multimedia information-providing system as claimed in claim 1 or 2, wherein the multimedia information-providing server transmits to the client personal computer a message checking whether a purchase request signal is transmitted to the client personal computer or to a predetermined address with storage on the record medium if the purchase request signal is inputted from the user, and provides multimedia information having a purchase request of the user in response to a response signal transmitted from the client personal computer.

10. The multimedia information-providing system as claimed in claim 1 or 2, wherein the multimedia information-providing server reproduces in a soundless state at a low speed only an animation corresponding to sentences separated by an arbitrary sentence repeat button if the user clicks the arbitrary sentence repeat button indicated on a caption area with a right button of a mouse.

11. The multimedia information-providing system as claimed in claim 1, wherein the driving program stored on the record medium comprises steps of:
arbitrarily duplicating and storing driving data of the record medium on a hard disc of the client personal computer equipped with a drive in case that the user inserts the record medium in the drive in order to reproduce the multimedia information recorded and stored on the record medium;
starting the program in progress information conditions with a construction of the basic display after the driving data is duplicated and stored on the hard disc;
displaying a caption page by page on a caption display while executing the multimedia information from the beginning or a book marked page in a bookmark condition of the progress information conditions; and
indicating in a changed color the caption corresponding the executed animation, and indicating in a different color vocabularies having explanations thereof.

12. The multimedia information-providing system as claimed in claim 11, wherein the driving program stored in the record medium comprises steps of:
stopping an reproduction of the multimedia information and displaying a vocabulary explanation by displaying a vocabulary explanation window if the user selects a vocabulary having a vocabulary explanation according to a selection of the user;
executing a study mode for skipping multimedia information without a voiceless signal and for reproducing multimedia information with a voice signal;
executing a record mode for outputting an original voice by selecting a sentence one by one by the user and for recording and reproducing a original voice of the user after outputting the voice; and
executing a text data output mode for displaying a page list and for printing page data and entire text data desired by the user.

13. The multimedia information-providing system as claimed in any of claims 1 to 12, wherein the multimedia information is produced by at least one of AVI, MPEG-1, SVCD, DVD, and MPEG-4 modes.

14. A multimedia information-providing method based on a network, comprising steps of:
(1) building a database through a production of multimedia information by a system administrator in a multimedia information-providing server, and building a web site for providing the produced multimedia information to a user;
(2) performing a communication connection to the multimedia information-providing server by plural client personal computer users;
(3) providing different multimedia information to each user according to each client personal computer user connected to the multimedia information-providing server;
(4) informing a user of a purchase amount in case that a purchase request signal is inputted by the user provided with multimedia information, outputting a message informing of a completion of a purchase of the multimedia information in case that a recognition signal for the purchased amount is inputted from the client personal computer, and delivering the multimedia information to the user.

15. The multimedia information-providing method as claimed in claim 14, wherein the step(1) comprises substeps of:
(1-1) producing a multimedia file by converting multimedia information formed in an analog signal into a digital signal;
(1-2) inputting a text of the multimedia file by using a document writer;
(1-3) inputting an original text and a translated text of the multimedia file, and detailed descriptions of main vocabularies in a text document form;
(1-4) assigning numbers to start and end frames of caption data by detecting multimedia corresponding to a sentence while reproducing the multimedia file;
(1-5) preparing basic data of the multimedia by combining the text and the numbers of the start and end frames; and
(1-6) preparing multimedia information for an audio track in the same process as in a process for producing the multimedia information corresponding to an animation based on position information of numeric values of thousandths of a reproduction position in order to correspond to the audio track recorded on a music CD separately from the multimedia information reproduction based on the animation.

16. The multimedia information-providing method as claimed in claim 15, wherein a structure of the basic data of the multimedia of the step (1-4) includes:
vocabulary description information data having a page number field, a line number field, a start point field, an end point field, an indicated vocabulary field, and a vocabulary description field;
text contents/line indication information data having the page number field, the line number field, a two sentence indication field, the start point field, the end point field, and the main sentence field;
page/multimedia file information data having the page number field, the start point field, the end point field, an English sentence number field, a Korean sentence number field, and a multimedia file name field;
text output/display movement display indication information data having the page number field and page contents field;
text file information data having the page number and the page contents field; and
text file information data having a track number field, an explanation page field, a text page field, and an end page field.

17. The multimedia information-providing method as claimed in claim 14, wherein the step(2) comprises substeps of:
(2-1) performing a connection to the multimedia information-providing server through an execution of a web browser built in the client personal computer;
(2-2) showing a user login display outputted from the multimedia information-providing server after the communication connection;
(2-3) outputting to the multimedia information-providing server login data of an identification and a password inputted by each user through a connected user;
(2-4) judging whether the user is registered in the multimedia information-providing server through the login data inputted by the connected user; and
(2-5) showing an initial display on a screen by the multimedia information server by outputting initial display data of different multimedia information to the client personal computer according to an analysis result through individual information of the database part in case that the user is registered.

18. The multimedia information-providing method as claimed in claim 14, wherein an original text, a translated text, or the original text and translated text is selectively provided to the client personal computer as a detailed description of the multimedia information according to a selection of the user.

19. The multimedia information-providing method as claimed in claim 14, wherein a bookmark function to the multimedia information provided to the client personal computer is provided in the step(3), so that multimedia information after the multimedia information provided to the user prior to a re-connection is provided if the user is disconnected and then re-connected and selects the bookmark function during searching the multimedia information.

20. The multimedia information-providing method as claimed in claim 20, wherein a slow motion function is provided to the multimedia information supplied to the client personal computer in the step(3), so that an animation corresponding to sentences separated by an arbitrary sentence repeat button is reproduced if the user clicks the arbitrary sentence repeat button indicated on a caption area with a right button of a mouse.

21. The multimedia information-providing method as claimed in any of claims 14 to 20, wherein the multimedia information is produced by at least one of AVI, MPEG-1, SVCD, DVD, and MPEG-4 modes.

22. The multimedia information-providing method as claimed in claim 14, wherein a message checking whether a purchase request signal is transmitted to the client personal computer or to a predetermined address with storage on the record medium is transmitted to the client personal computer if the purchase request signal is inputted from the user in the step(4), and provides multimedia information having a purchase request of the user in response to a response signal transmitted from the client personal computer.

23. The multimedia information-providing method as claimed in claim 14, wherein the multimedia information provided in the multimedia information-providing server in the step(3) allows to output sentence data corresponding to a multimedia frame, progress a multimedia file and the sentence data in synchronization in case that the user selects a previous or a next display of the multimedia information shown on the display, and provide sentence data corresponding to a present multimedia frame in a different color from displayed different sentence data.

24. In record medium disposed in a record reproduction device equipped in a personal computer and for reproducing predetermined multimedia information, the record medium comprising:
a first area for recording multimedia information;
a second area for recording text data corresponding to the multimedia information; and
a third area for recording a driving program for reproducing multimedia for outputting text data corresponding to the multimedia information.

25. The record medium as claimed in claim 24, wherein the second area includes: position data allowing a position of the multimedia information to be recognized; and contents data indicated on a display corresponding to the position data.

26. The record medium as claimed in claim 25, wherein the contents data includes original caption data corresponding to an audio signal of an audio track contained in an audio CD, translated caption data, page information data, and vocabulary explanation data, at least one of which is read by a computer system.

27. The record medium as claimed in claim 27, wherein a driving program stored in the record medium comprises steps of:
arbitrarily duplicating and storing driving data of the record medium on a hard disc of a client personal computer equipped with a drive in case that a user inserts the record medium in the drive in order to reproduce the multimedia information recorded and stored on the record medium;
starting the program in progress information conditions with a construction of the basic display afier the driving data is duplicated and stored on the hard disc;
displaying a caption page by page on a caption display while executing the multimedia information from the beginning or a book marked page in a bookmark condition of the progress information conditions; and
indicating in a changed color the caption corresponding the executed animation, and indicating in a different color vocabularies having explanations thereof.

28. The record medium as claimed in the claim 25 or 27, wherein the driving program stored in the record medium comprises steps of:
stopping an reproduction of the multimedia information and displaying a vocabulary explanation by displaying a vocabulary explanation window if the user selects a vocabulary having a vocabulary explanation according to a selection of the user;
executing a study mode for skipping multimedia information without a voiceless signal and for reproducing multimedia information with a voice signal;
executing a record mode for outputting an original voice by selecting a sentence one by one by the user and for recording and reproducing a original voice of the user after outputting the voice; and
executing a text data output mode for displaying a page list and for printing page data and entire text data desired by the user.

29. Record medium to be read by a computer system, comprising:
a first directory having multimedia information;
a second directory having multimedia driving data;
a third directory having an error self-restoration program;
a fourth directory containing an installation program; and
an automatic installation file.

30. The record medium as claimed in claim 29, wherein the second directory having multimedia driving data includes:
vocabulary description information having page numbers, line numbers, start points, end points, vocabularies, and indicated vocabularies in order;
record medium recognition/page number information having record medium numbers, start pages, and end pages in order;
text contents/line indication information having page numbers, line numbers, two sentence indications, the start points, the end points, and main sentence in order;
page/multimedia file information having the page numbers, the start points, the number of English sentences, the number of Korean sentences, and multimedia file names;
text output information having the page numbers and page contents;
display indication information having page numbers for display movements and page contents;
text file information having voice signal numbers, explanation pages, voice signal pages, and end pages;
help index information having index numbers and help titles; and
record-purpose file for separately managing record data for a practice of the user.

31. The record medium as claimed in any of claim 24 or 29, wherein a slow motion function is provided to the multimedia information recorded on the record medium, so that an animation corresponding to sentences separated by an arbitrary sentence repeat button is reproduced if the user clicks the arbitrary sentence repeat button indicated on a caption area with a right button of a mouse.

32. The record medium as claimed in any of claim 25 or 29, wherein the multimedia information is produced by at least one of AVI, MPEG-1, SVCD, DVD, and MPEG-4 modes.
